# EUROPÄISCHE PATENTSCHRIFT

(11) **EP 1 136 162 B1**
(45) Veröffentlichungstag und Bekanntmachung des Hinweises auf die Patenterteilung: **10.08.2005**
(21) Anmeldenummer: 00126258.3
(22) Anmeldetag: 01.12.2000
(51) Int. Cl.: B23C 5/24

(54) **Plan-oder Eckfräser**
Facing- and corner milling cutter
Fraise à surfacer et à fraise des coins

(30) Priorität: 16.03.2000 DE 10012818
(43) Veröffentlichungstag der Anmeldung: 26.09.2001
(73) Patentinhaber: Fette GmbH, 21493 Schwarzenbek (DE)
(72) Erfinder: Focken, Andreas, 21493 Schwarzenbeck (DE); Oppelt, Klaus, 21481 Lauenburg (DE)
(74) Vertreter: Patentanwälte Hauck, Graalfs, Wehnert, Döring, Siemons, Schildberg

(56) Entgegenhaltungen:
- EP-A- 0 713 739
- DE-A- 19 740 410
- FR-A- 2 094 446

## Beschreibung

Die Erfindung bezieht sich auf einen Plan- oder Eckfräser nach dem Oberbegriff des Patentanspruchs 1.

Aus DE 197 06 377 ist ein Plan- oder Eckfräser bekannt geworden, bei dem am Umfang eines Trägerkörpers Taschen angeordnet sind, die sich parallel zur Drehachse des Trägerkörpers erstrecken und zur Aufnahme von Kassetten dienen. Die Kassetten weisen ihrerseits Sitzflächen auf für die Aufnahme von Schneidplatten. Die Schneidplatten werden mit Hilfe einer geeigneten Befestigungsvorrichtung in der Kassette befestigt, beispielsweise mit Hilfe von Schrauben, die durch eine Durchbohrung der Schneidplatten hindurchgeführt sind. Die Kassetten sind ihrerseits in den Taschen befestigbar, beispielsweise ebenfalls mit Hilfe einer Schraube, die mit einer Gewindebohrung im Grund der Tasche zusammenwirkt. Bei dem bekannten Werkzeug sind außerdem Mittel vorgesehen, um die Kassette axial zu justieren, damit für die Gesamtheit der Schneidplatten eine ausreichende Planheit erhalten wird. In einer Ausführungsform ist hierzu eine einzige Einstellschraube für jede Kassette vorgesehen, welche in einer Gewindebohrung des Trägerkörpers sitzt, die von der Stirnseite des Trägerkörpers ausgehend annähernd parallel zur Drehachse des Trägerkörpers verläuft. Die Einstellschraube hat zum Beispiel einen Kopf, der mit einer entsprechenden Ausnehmung der Kassette zusammenwirkt. Auf diese Weise kann die Kassette aktiv in beiden axialen Richtungen fein eingestellt werden. Die Grobeinstellung erfolgt durch die Befestigung der Kassette in der Tasche. Daher kann die Feineinstellung nur im Rahmen der Toleranz der Befestigung der Kassette erfolgen.

Bei einer anderen Ausführungsform des bekannten Plan- und Eckfräsers ist bekannt, die Kassetten im Passsitz in den Taschen aufzunehmen und den Trägerkörper mit einer zur freien Stirnseite des Trägerkörpers hin gerichteten radialen Anschlagfläche vorzusehen für die Anlage der Kassetten. Mit Hilfe des Einstellstiftes können dann die Kassetten in Anlage zur Anschlagfläche gebracht werden.

Bei dem Plan- und Eckfräser kann es auch nach dem Justieren noch zu unerwünschten Abweichungen der Lage der Schneideinsätze kommen, insbesondere dadurch, dass die Kassetten endgültig festgezogen werden. Häufig bestehen die Schneideinsätze aus einem Hartstoff bzw. sind mit einem Hartstoff beschichtet oder mit Diamant, welcher Schneidstoff sehr empfindlich auf zu starke Beanspruchungen reagiert, die bei einer Abweichung der Schneideinsätze von der Planebene unweigerlich eintritt.

Aus EP-A-0713739 ist ein Tangentialfräser bekannt geworden, bei dem am Umfang eines Trägerkörpers Kassetten angeordnet sind, in denen Schneideinsätze mit Hilfe von Schrauben befestigt werden. Die Kassette, die mit einer Schraube am Trägerkörper befestigt ist, weist mehrere annähernd in einer Radialebene verlaufende Schlitze auf. Ein Schlitz erlaubt das Ankippen eines Abschnitts der Kassette gegenüber dem Trägerkörper mit Hilfe einer ersten Schraube, deren inneres Ende mit dem Trägerkörper zusammenwirkt. Ein senkrecht dazu verlaufender Schlitz erlaubt die Verformung eines Abschnitts der Kassette mit einer zweiten Schraube derart, daß die durch das Ankippen bewirkte Verlagerung der Schneidkante des Schneideinsatzes in einer Ebene wieder rückgängig gemacht werden kann. Die Verstellung des zuletzt erwähnten Abschnittes der Kassette erfolgt mit Hilfe der zweiten Schraube, die in den Schlitz eingeschraubt ist und die einen konischen Kopf aufweist, der mit einer konischen Gegenfläche einer Bohrung zur Aufnahme der Schraube zusammenwirkt.

Der Erfindung liegt daher die Aufgabe zugrunde, einen Plan- oder Eckfräser zu schaffen, mit dem hochgenaue Flächen am Werkstück geformt werden können, wobei den Kräften beim Fräsvorgang ausreichender Widerstand entgegen gesetzt wird.

Diese Aufgabe wird durch die Merkmale des Patentanspruchs 1 gelöst.

Bei der Erfindung weist die Kassette in einem radial außen liegenden Abschnitt einen annähernd in der Radialebene des Trägerkörpers durchgehend verlaufenden Spalt auf, der mithin den radial äußeren Abschnitt der Kassette in zwei axial beabstandete Unterabschnitte unterteilt. Der Spalt nimmt einen Einstellkeil auf, der annähernd komplementär für Querschnittskontur des Spalts geformt ist und der mit Hilfe einer Einstellschraube im Spalt radial verstellbar ist. Wird nach dem endgültigen Festziehen der Kassette, dem ein Justieren der Kassette in der Tasche bereits vorausgegangen ist, entweder mit Hilfe der in beiden Richtungen axial verstellbaren Einstellschraube oder durch Anlage der Kassette an einer Anschlagfläche, eine Fehljustierung festgestellt, kann eine Nachjustierung mit Hilfe des Einstellkeils erfolgen.

Die Verstellung des Einstellkeils in dem Spalt erfolgt mit Hilfe einer Schraube, die durch eine Durchbohrung des Keils hindurchgeführt und mit einer Gewindebohrung im Grund des Spalts zusammenwirkt. Dabei kann der Spalt ebenfalls Keilform aufweisen.

Da für die Durchbohrung für die Einstellschraube bzw. für die Stabilität eine gewisse Materialmasse für den Keil erforderlich ist, sieht eine Ausgestaltung der Erfindung vor, dass in einer Wand des Spalts, vorzugsweise derjenigen, welche dem Schneideinsatz abgekehrt ist, eine Nut eingeformt ist, die eine komplementäre Rippe des Keils aufnimmt. Nut und Keil sind im Querschnitt vorzugsweise halbkreisförmig. Die Durchbohrung kann dann teilweise durch die Rippe des Keils hindurchgeführt werden. Auf diese Weise kann ausreichend Material zwischen den Sitzflächen für den Schneideinsatz und dem Spalt bestehen bleiben. Dies ist insbesondere dann wichtig, wenn der Schneideinsatz mit Hilfe einer annähernd mittigen Schraube in der Kassette befestigt wird.

Da der Schneideinsatz normalerweise nicht mittig zur Längsachse der Kassette angebracht ist, ist nach einer weiteren Ausgestaltung der Erfindung vorteilhaft, wenn der Keil, der höchstens die Breite des Schneideinsatzes aufweist, unmittelbar zum Schneideinsatz ausgerichtet im Spalt angeordnet. Dadurch kann der Keil die axiale, auf den Schneideinsatz ausgeübte Kraft wirksam übertragen.

Die Erfindung wird nachfolgend anhand eines in Zeichnungen dargestellten Ausführungsbeispiels näher erläutert.
- Fig. 1: zeigt perspektivisch schematisch einen Planfräser nach der Erfindung, wobei die Kassetten als Rohlinge dargestellt sind.
- Fig. 2: zeigt eine fertige Kassette des Fräsers nach Fig. 1.
- Fig. 3: zeigt eine Seitenansicht der Kassette nach Fig. 2.
- Fig. 4: zeigt eine Stirnansicht der Kassette nach Fig. 2.
- Fig. 5: zeigt eine Draufsicht der Kassette nach Fig. 2.
- Fig. 6: zeigt einen Schnitt durch die Darstellung nach Fig. 5 entlang der Linie 6-6.

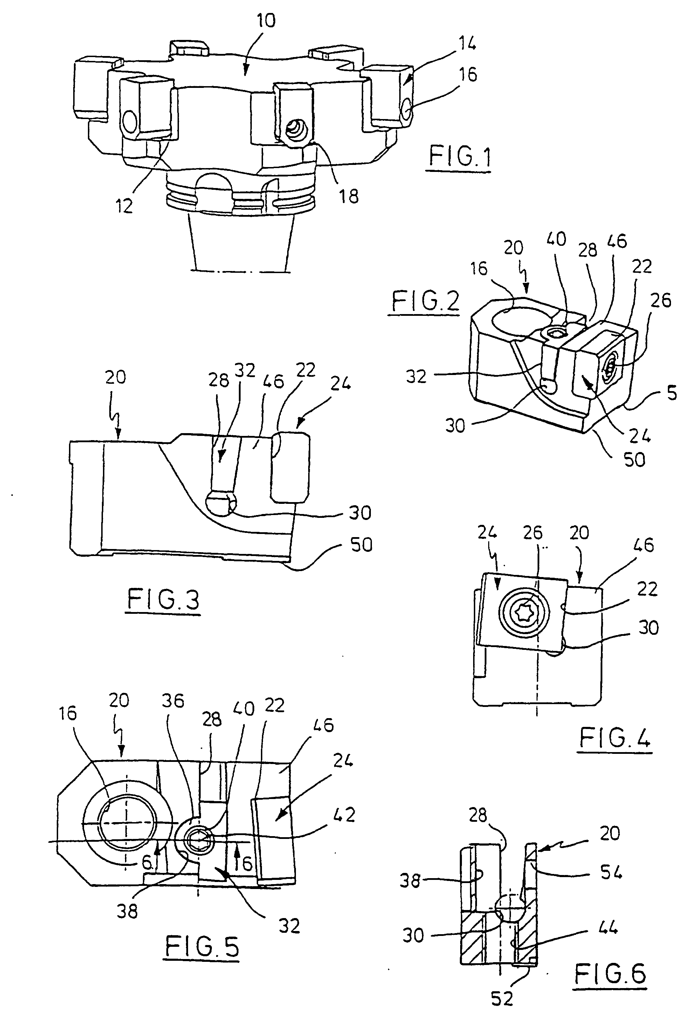

In Fig. 1 ist ein Trägerkörper 10 angedeutet, der am Umfang eine Reihe von sich axial erstreckenden Taschen 12 aufweist. In den Taschen sind Kassetten 14 aufgenommen, die hier als Rohlinge gezeichnet sind. Sie weisen bereits eine Durchbohrung 16 auf, damit sie mit Hilfe einer Schraube (nicht gezeigt) in der Tasche festgelegt werden können. Der in Fig. 1 gezeigte Fräser kann einem bekannten Planfräser nachgebildet sein, wie er in der bereits erwähnten DE 197 06 377 offenbart ist. Dort sind auch Möglichkeiten angedeutet, um die Kassetten 14 axial zu justieren, beispielsweise mit Hilfe einer in die Stirnseite des Trägerkörpers 10 eingeschraubten Schraube, deren Kopf mit der Kassette 14 zusammenwirkt, um diese nach dem ersten Festziehen durch die Kassettenbefestigungsschraube fein einzustellen. Alternativ besteht auch die Möglichkeit, die Kassette 16 mit einer Anschlagfläche 18 in der Tasche 12 zusammenwirken zu lassen. In diesem Fall ist jedoch erforderlich, dass die Kassette passgenau in der Tasche sitzt. Bei der letzteren Justierung wird die Kassette gegen die Anschlagfläche 18 angelegt. In den Figuren 2 bis 6 ist die fertige Kassette gezeigt. Sie ist dort mit 20 bezeichnet. Nachfolgend wird daher auf die Figuren 2 bis 6 Bezug genommen.

Die Kassette 20 weist ihrerseits an einem axialen Ende eine Tasche 22 auf, in welcher Sitzflächen ausgebildet sind für die Aufnahme eines Schneideinsatzes 24, der mit Hilfe einer Schraube 26 fest an der Kassette 20 festgelegt werden kann. Die Schraube erstreckt sich durch eine mittige Durchbohrung des Schneideinsatzes 24. Eine derartige Befestigung ist an sich bekannt.

Zwischen der Tasche 22 und der Durchbohrung 16 der Kassette ist im oberen Bereich der Kassette 20 durchgehend ein keilförmiger Spalt 28 geformt. Der Spalt erstreckt sich quer zur Längsachse der Kassette 20 und endet in einer im Schnitt kreisförmigen Nut 30, welche die Aufgabe hat, Kerbwirkungen zu vermeiden. Der Spalt 28 nimmt einen Einstellkeil 32 auf, der annähernd komplementär zur Querschnittskontur des Spalts 28 geformt ist und der an einer Außenseite eine im Querschnitt halbkreisförmige Rippe 36 aufweist, die mit einer komplementären Nut 38 in der Wand des Spalts 28, welche von dem Schneideinsatz 24 abgewandt ist, zusammenwirkt. Durch den Keil 32 erstreckt sich radial eine durchgehende Bohrung 40, welche eine Schraube 42 aufnimmt (Fig. 5), die mit einer Gewindebohrung 44 (Fig. 6) im Grund des Spalts 28 zusammenwirkt. Mit Hilfe der Schraube 42 kann die Lage des Keils 32 im Spalt 28 begrenzt verändert werden. Dadurch kommt es zu einer mehr oder weniger starken Abbiegung des Abschnitts 46 der Kassette 20, der den Schneideinsatz 24 hält. Auf diese Weise ist es möglich, die Lage der Schneidkante des Schneideinsatzes 24 zu justieren. Diese Justage kann erfolgen, nachdem die Kassette nach vorhergehender Justage mit Hilfe der Befestigungsschraube, welche durch die Bohrung 16 hindurchgeführt wird, fest im Träger 10 angebracht ist.

Nur der Vollständigkeit halber wird darauf hingewiesen, dass die Kassette an der Unterseite Auflagerflächen 50, 52 aufweist für eine präzise Auflage in der Tasche 12 des Trägers 10.

Aus Fig. 5 ist erkennbar, dass die Breite des Keils 32 etwas geringer ist als die des Schneideinsatzes 24, wobei Schneideinsatz 24 und Keil 32 in Achsrichtung zueinander ausgerichtet sind, damit der Keil 32 die axiale Last voll aufnehmen kann.

In Fig. 6 ist im Übrigen die Gewindebohrung 54 zu erkennen, in welche die Schraube 26 zur Befestigung des Schneideinsatzes 24 geschraubt wird.

Die Mittel zur Einstellung der Kassette 20 in der Tasche 18 in achsparalleler Richtung mit Hilfe eines Stiftes, einer Schraube oder dergleichen, wie sie etwa aus DE 197 06 377 bekannt geworden sind, sind in der Zeichnung nicht dargestellt.

## Patentansprüche

1. Plan- oder Eckfräser mit einem Trägerkörper (10), der an seinem Umfang in gleichmäßig oder ungleichmäßig verteilten Abständen Taschen (12) aufweist, die sich parallel zur Drehachse des Trägerkörpers (10) erstrecken für die Aufnahme von Kassetten (20), die ihrerseits Sitzflächen aufweisen für die Aufnahme von Schneidplatten (24) in den Kassetten (20), einer Befestigungsvorrichtung für die Schneidplatten (24) in der Kassette (20) einer Schraubbefestigung zur Festlegung der Kassetten (20)in den Taschen (12), wobei ein Abschnitt der Kassetten (20) einen annähernd in der Radialebene verlaufenden Spalt (28) aufweist, der einen Einstellkeil (32) aufnimmt, dessen Lage mit Hilfe einer Einstellschraube (42) im Spalt (28) einstellbar ist, **dadurch gekennzeichnet, daß** jeweils ein Einstellstift für jede Kassette (20) für eine begrenzte axiale Verstellung der Kassetten (20) in den Taschen (12) in beiden Richtungen vorgesehen ist, der Spalt (28) sich quer zur Längsachse der Kassetten (20) vollständig durch einen radial äußeren Abschnitt der Kassetten (20) hindurch erstreckt, ein separater Einstellkeil (32) mit annähernd einer komplementären Querschnittskontur wie der Spalt (28) im Spalt (28) angeordnet ist und eine die Einstellschraube (42) durch eine radiale durchgehende Bohrung im Einstellkeil (32) hindurchgeführt und in eine Gewindebohrung (44) im Grund des Spalts (28) einschraubbar ist.

2. Fräser nach Anspruch 1, **dadurch gekennzeichnet, dass** der Spalt (28) Keilform hat.

3. Fräser nach Anspruch 1 oder 2, **dadurch gekennzeichnet, dass** in einer Wand des Spalts (28) eine im Querschnitt halbkreisförmige Nut (38) eingeformt ist, die eine komplementäre Rippe (36) des Keils (28) aufnimmt und die Durchbohrung (40) zum Teil durch die Rippe (36) geführt ist.

4. Fräser nach einem der Ansprüche 1 bis 3, **dadurch gekennzeichnet, dass** die Sitzflächen in der Kassette (20) so ausgebildet sind, dass der Schneideinsatz (24) gegenüber der Längsachse der Kassette (20) zur einen Seite hin versetzt ist, die Breite des Keils (32) annähernd der Breite des Schneideinsatzes (24) entspricht und der Keil annähernd mittig in Bezug auf den Schneideinsatz (24) im Spalt (28) angeordnet ist.

## Claims

1. A surface milling or angular milling cutter, comprising a carrier body (10) which circumferentially, at uniformly or non-uniformly distributed spacings, has disposed pockets (12) which extend in parallel with the axis of rotation of the carrier body (10) for the accommodation of cassettes (20) which, in turn, have seating surfaces for the accommodation of cutting blades, fastening means for the cutting blades (24) in the cassette (20), a threaded mounting means to locate the cassettes (20) in the pockets (12), a portion of the cassettes (20) having an approximately radially extending slot (28) which accommodates a setting wedge (32) the position of which being adjustable by a set screw (42) in the slot (28), for each cassette (20) an adjusting pin is provided for a limited axial displacement of the cassettes in both directions, the slot (28) extends transverse to the longitudinal axis of the cassettes (20) completely through a radially outer portion of the cassettes, a separate setting wedge (32) having nearly the cross-sectional contour of the slot (28) is located in the slot (28), an adjusting screw (42) being extended through a radial bore in the wedge (32) and being threaded in a threaded bore (44) in the bottom of the slot (28),
**characterized in that**
the radially outer portion of the cassette (20) is divided by a gap (28) extending approximately in the radial plane, and the gap (28) receives a setting wedge (32) the position of which can be adjusted by means of an adjusting screw (42) in the gap (28).

2. The milling cutter according to claim 1, **characterized in that** the slot (28) is wedge-shaped.

3. The milling cutter according to claim 1 or 2, **characterized in that** a wall of the slot (28) has formed therein a groove (38) of a semicircular cross-section which receives a complementary rib (36) of the wedge (28) and that the through bore (40) is passed, in part, through the rib (36).

4. The milling cutter according to any one of claims 1 to 3, **characterized in that** the seating surfaces in the cassette (20) are configured so that the cutting blade (24) is offset to one side from the longitudinal axis of the cassette (20), the width of the wedge (32) approximately corresponds to the width of the cutting blade (24), and the wedge (32) is disposed approximately centrally with regard to the cutting blade (24) in the slot (28).

## Revendications

1. Fraise à surfacer et à fraiser des coins avec un corps support (10) qui présente des poches (12) réparties de façon régulière ou irrégulière sur sa périphérie et qui s'étendent parallèlement à l'axe de rotation du corps support (10) pour loger des cassettes (20) qui présentent de leur côté des surfaces d'assise pour loger des plaquettes de coupe (24) dans les cassettes (20), d'un dispositif de fixation pour les plaquettes de coupe (24) dans la cassette (20), d'une fixation par vis pour la fixation des cassettes (20)dans les poches (12), un tronçon des cassettes (20) présentant un interstice (28) s'étendant approximativement dans le plan radial et qui loge une clavette de réglage (32) dont la position peut être réglée à l'aide d'une vis de réglage (42) dans l'interstice (28), **caractérisée en ce que** à chaque fois une broche de réglage pour chaque cassette (20) est prévue pour un déplacement axial limité des cassettes (20) dans les poches (12) dans les deux directions, l'interstice (28) s'étend transversalement à l'axe longitudinal des cassettes (20) totalement à travers un tronçon extérieur radial des cassettes (20), une clavette de réglage (32) séparée avec approximativement un contour de section complémentaire tel que l'interstice (28) est disposée dans l'interstice (28) et une vis de réglage (42) est guidée à travers un alésage débouchant radial dans la clavette de réglage (32) et peut être vissée dans un alésage fileté (44) dans le fond de l'interstice (28).

2. Fraise selon la revendication 1, **caractérisée en ce que** l'interstice (28) a une forme de clavette.

3. Fraise selon la revendication 1 ou 2, **caractérisée en ce qu'**une rainure (38) de section semi-circulaire est formée dans une paroi de l'interstice (28) et loge une nervure complémentaire (36) de la clavette (28), et **en ce que** l'alésage débouchant (40) est conduit partiellement à travers la nervure (36).

4. Fraise selon une des revendications 1 à 3, **caractérisée en ce que** les surface d'assise dans la cassette (20) sont constituées de sorte que l'insert de coupe (24) est, par rapport à l'axe longitudinal de la cassette (20), décalé vers un côté, la largeur de la clavette (32) correspond approximativement à la largeur de l'insert de coupe (24), et **en ce que** la clavette est disposée de façon approximativement centrée dans l'interstice (28) par rapport à l'insert de coupe (24).
